# EUROPÄISCHE PATENTSCHRIFT

(11) **EP 0 943 854 B1**
(45) Veröffentlichungstag und Bekanntmachung des Hinweises auf die Patenterteilung: **14.05.2003**
(21) Anmeldenummer: 99104824.0
(22) Anmeldetag: 11.03.1999
(51) Int. Cl.: F16L 19/08

(54) **Klemmringverbindung**
Clamping ring connection
Connexion par anneau de serrage

(30) Priorität: 17.03.1998 DE 19811500
(43) Veröffentlichungstag der Anmeldung: 22.09.1999
(73) Patentinhaber: DIETER WILDFANG GmbH, D-79379 Müllheim (DE)
(72) Erfinder: Grether, Herman, 79379 Müllheim (DE)
(74) Vertreter: Patent- und Rechtsanwaltssozietät, Maucher, Börjes & Kollegen

(56) Entgegenhaltungen:
- WO-A-88/04385
- DE-B- 1 231 074
- DE-U- 8 814 883
- US-A- 4 777 669

## Beschreibung

Die Erfindung betrifft eine Klemmringverbindung für eine Rohrleitung, insbesondere im Sanitärbereich, mit einem hülsenförmigen Schraubanschluß, der ein Außengewinde trägt, mit einem Schraubkörper, der mit einem Innengewinde auf das Außengewinde des Schraubanschlusses aufschraubbar ist und eine kegelstumpfförmige Konus-Innenfläche aufweist, mit einem geschlitzten und von der Konus-Innenfläche des .Schraubkörpers beaufschlagten Klemmring, der durch Aufschrauben des Schraubkörpers auf den Schraubanschluß radial nach innen gegen die Rohrleitung verspannbar ist und einen runden bzw. rotationssymmetrischen Querschnitt aufweist, sowie mit einem Dichtelement aus elastischem Material, das vom Klemmring durch eine Ringscheibe auf Abstand gehalten und in dem vom Rohrleitungs-Außenumfang und Schraubkörper-Innenmantel beziehungsweise von der Ringscheibe und der benachbarten Stirnfläche des Schraubanschlusses umschlossenen Spaltraum angeordnet ist.

Lösbare Rohrverbindungen werden insbesondere bei Sanitärinstallationen bereits in verschiedenen Ausführungen eingesetzt. So kennt man beispielsweise auch eine Rohrverbindung, die als Klemmringverschraubung ausgebildet ist (vgl. Alfons Gaßner, Der Sanitärinstallateur, Verlag Handwerk und Technik, 4. Auflage 1995, S. 52, Bild 2). Die vorbekannte Klemmringverbindung weist einen hülsenförmigen Schraubanschluß mit Außengewinde auf, auf das ein als Überwurfmutter ausgebildeter Schraubkörper mit seinem Innengewinde aufschraubbar ist. Im Schraubkörper ist eine kegelstumpfförmige Konus-Innenfläche vorgesehen, welche die korrespondierende Konus-Außenfläche eines im Querschnitt keilförmigen Klemmrings beaufschlagt. Der Klemmring ist geschlitzt und dementsprechend unvollständig geschlossen und wird durch Aufschrauben des Schraubkörpers auf den Schraubanschluß derart radial nach innen an das glattwandige Rohr gepreßt, daß dieses vom Schraubkörper umgriffene und in das Hülseninnere des Schraubanschlusses vorstehende Rohr gegen ein Herausziehen beziehungsweise Herausdrücken kraftschlüssig gesichert ist.

Die vorbekannte Klemmringverbindung weist darüber hinaus ein ringförmiges Dichtelement aus elastischem Material auf, das vom Klemmring durch eine als Druckring dienende Ringscheibe getrennt ist. Dieses Dichtelement kann über die Ringscheibe vom Klemmring derart zusammengepreßt werden, daß das Dichtelement, welches bei Druckbeaufschlagung sich radial ausweitet, einerseits gegen das Rohr und andererseits gegen den Schraubkörper gepreßt wird. Dabei ist das ringförmige Dichtelement in einem Spaltraum angeordnet, der vom Rohrleitungs-Außenumfang und Schraubkörper-Innenmantel beziehungsweise von der Ringscheibe und der benachbarten Stirnfläche des Schraubanschlusses umschlossen ist.

Bei dieser vorbekannten Klemmringverbindung wird jedoch der im Querschnitt keilförmige Klemmring beim Verschrauben des Schraubkörpers mit dem Schraubanschluß nicht gleichmäßig verformt, sondern an wenigen Stellen lediglich derart eingeknickt, daß der Klemmring an der Rohrleitung nur punktuell anliegt. Darüber hinaus wird der Klemmring der vorbekannten Rohrverbindung als Drehteil hergestellt; solche Drehteile haben regelmäßig oberflächliche Riefen, welche zu einer erhöhten Reibung zwischen dem Klemmring und dem als Überwurfmutter ausgebildeten Schraubkörper sowie zu einer unerwünschten Riefenbildung an deren benachbartem Leitungsumfang führen. Darüber hinaus wirkt eine ansich erwünschte Mikroverzahnung zwischen dem Klemmring und der Überwurfmutter einer gleichmäßigen Verformung des Klemmrings noch zusätzlich entgegen, da die Reibungsverhältnisse undefinierbar und nur schwer beherrschbar sind.

Die ansonsten glattwandige Rohrleitung wird daher vor allem durch das sich bei axialer Verspannung durch Anziehen des Schraubkörpers aufweitende und dabei an den Leitungsumfang anlegende Dichtelement gehalten. Da solche Rohrleitungen insbesondere im Sanitärbereich aus Kupfer, Kunststoff oder aus anderen vergleichsweise weichen Materialien hergestellt werden, kann das Dichtelement beim Verschrauben der vorbekannten Klemmringverbindung die Rohrleitung derart einschnüren und verformen, daß der Rohrleitungs-Verformungsbereich in axialer Richtung bis weit über den Klemmring reicht.

Durch eine weitreichende Verformung der Rohrleitung wird aber wiederum die kraftschlüssige Verbindung des keilförmigen Klemmrings an der Rohrleitung gelockert und auch in diesem Bereich werden Spalte geöffnet, in welche das gummielastische Dichtelement aufgrund seiner Fließeigenschaften insbesondere bei höheren Leitungstemperaturen mit der Zeit nachfließen kann. Mit einem solchen Nachfließen des Dichtelementes läßt aber auch dessen Klemmwirkung nach, so daß es zu einem unbeabsichtigten kontinuierlichen oder schlagartigen Lösen der vorbekannten Klemmringverbindung und nachfolgend zu erheblichen Schäden durch das Fördermedium kommen kann.

Aus der EP 0 073 050 B1 ist bereits eine ebenfalls als Klemmringverschraubung ausgebildete Rohrverbindung bekannt, die eine umlaufende, vom Verschraubungsraum getrennte Ausnehmung auf der Innenfläche des Schraubanschlusses aufweist, wobei in der Ausnehmung eine Lippendichtung vorgesehen ist. Bei dieser vorbekannten Klemmringverbindung wird die von der Dichtfunktion getrennte Haltefunktion mittels eines Klemmringes erreicht, der einen kreisförmigen Ausgangs-Querschnitthat, auf dessen radialer Innenseite eine kreisbogenförmige Rille angeordnet ist, durch welche zwei nach innen gerichtete scharfe Kanten gebildet werden, die sich beim Klemmvorgang in die Außenfläche der Rohrleitung festhaken sollen. Die aus EP 0 073 050 B1 vorbekannte Klemmringverbindung eignet sich jedoch weniger gut für solche Rohrleitungen, die - wie im Sanitärbereich üblich - aus Kunststoff, Kupfer oder einem anderen vergleichsweise weichen Rohrmaterial hergestellt sind. Aufgrund der am Klemmring vorgesehenen scharfkantigen Ränder schneidet sich nämlich dieser in das weiche Rohrmaterial ein und führt damit zu unerwünschten Einschnitten, zu einer Beschädigung der eventuell vorhandenen Chrom-Oberflächen sowie gegebenenfalls zu einer Korossion der Rohrleitung in diesem Leitungsabschnitt.

Da bei der aus EP 0 073 050 B1 vorbekannten Klemmringverbindung die Klemmwirkung allein vom Klemmring und nicht zusätzlich auch von der Lippendichtung erzeugt wird, sind meist mehrere Umdrehungen an dem als Überwurfmutter ausgebildeten Schraubkörper notwendig, um einen ausreichend festen Halt der vorbekannten Klemmringverbindung zu erreichen. Da insbesondere im Sanitärbereich solche Rohrverbindungen unterhalb von Spülbecken, hinter Einbauschränken und somit unter beengten Platzverhältnissen montiert werden müssen, sind aber mehrere Umdrehungen am Schraubkörper nicht oder nur mit großen Anstrengungen möglich. Da das bei sanitären Anschlußleitungen verwendete Kunststoff- oder Kupferrohr im Verbindungsbereich zudem meist einen unrunden Querschnitt, lokale Riefen sowie scharfkantige Rohrenden, welche die Lippendichtung beschädigen, hat, kann sich die in EP 0 073 050 B1 als Dichtelement vorgesehene Lippendichtung kaum dicht an die Rohrleitung anlegen, was eventuell zu unerwünschten Undichtigkeiten führt. Die in EP 0 073 050 B1 beschriebene Rohrverbindung ist daher beispielsweise für häusliche Sanitärarmaturenanschlüsse von Trinkwasserleitungen weniger gut geeignet.

Man hat auch bereits eine Klemmringverbindung der eingangs erwähnten Art geschaffen, die einen hülsenförmigen Schraubanschluß hat, auf dessen Außengewinde ein Schraubkörper mit einem Innengewinde aufschraubbar ist (vgl. DE-GM 17 77 607). Dieser Schraubkörper beaufschlagt mit einer kegelstumpfförmigen Konus-Innenfläche einen im Querschnitt runden Klemmring, der durch Aufschrauben des Schraubkörpers auf den Schraubanschluß radial nach innen gegen die Rohrleitung verspannbar ist. Dieser Klemmring ist durch eine Ringscheibe von einem Dichtring aus elastischem Material getrennt, der in dem vom Rohrleitungs-Außenumfang und Schraubkörper-Innenmantel bzw. von der Ringscheibe und der benachbarten Stirnfläche des Schraubanschlusses umschlossenen Spaltraum angeordnet ist.

In dem DE-GM 17 77 607 ist bereits erwähnt, daß die Reibungsverbindung zwischen dem Dichtungsring und der Rohrwandung häufig nicht ausreichend ist, um ein Herausziehen oder Herausdrücken des Rohres aus der Verschraubung zu verhindern. In dem DE-GM 17 77 607 ist daher ausdrücklich vorgesehen, daß der zwischen der kegelstumpfförmigen Konus-Innenfläche des Schraubkörpers und der Ringscheibe eingeklemmte Klemmring eine zusätzliche Haltekraft aufbringen und dazu beim Aufschrauben des Schraubkörpers auf den Schraubanschluß in der Umfangswandung des Rohres eine Bettungsnut einformen soll.

Durch die sowohl vom Dichtelement als auch vom Klemmring bewirkte Verformung der Rohrwandung wird jedoch nicht nur die kraftschlüssige Verbindung des Klemmrings wieder gelockert, sondern vielmehr werden auch hier Spalte geöffnet, in welche das gummielastische Dichtelement aufgrund seiner Fließeigenschaften insbesondere bei höheren Leitungstemperaturen mit der Zeit nachfließen kann. Mit einem solchen Nachfließen des Dichtelementes läßt aber auch dessen Klemmwirkung nach; wenn dann die vom Klemmring zusätzlich aufgebrachte Haltekraft nicht ausreicht, kann es bei der aus dem DE-GM 17 77 607 vorbekannten Klemmringverbindung zu einem unbeabsichtigten kontinuierlichen oder schlagartigen Lösen der Quetschverbindung kommen.

Aus der CH 668 629 A1 ist bereits eine Rohrverbindung bekannt, die einen elastischen Dichtring aus einem hochpolymeren Werkstoff hat, der mittels einer Hohlschraube oder dergleichen axial bewegbarem Preßteil durch Pressung in Dichtposition überführbar ist. Dieser Dichtring ist in einem bei beendeter Preßbewegung des Preßteiles dicht geschlossenen Ringraum angeordnet. Dabei wird in der CH 668 629 A1 ausdrücklich erwähnt, daß die untere Elastizitätsgrenze des Dichtringes derart niedrig gehalten ist, daß sich der Dichtring gewissermaßen wie eine Flüssigkeit an das Negativprofil des Ringraumes anpaßt, der in diesem Sinne ein Außenskelett für den Dichtring bildet. Um die aus der CH 668 629 A1 vorbekannte Rohrverbindung noch zusätzlich zu sichern, ist ein gehärteter Rundring vorgesehen, der mit der Hohlschraube für die Preßbewegung zu einer Bewegungseinheit verbunden ist. Der insoweit als Kupplungselement dienende Rundring liegt an der stirnseitigen Preßschulter der Hohlschraube im Bereich einer ringförmigen konkaven Anlagefläche an und ist mit der anderen Hälfte seines Ringquerschnittes in einer durch Kaltverformung eingeprägten Ringnut des Rohres aufgenommen. Um diese Ringnut in das Rohr einformen und das Rohr für die vorbekannte Rohrverbindung entsprechend präparieren zu können, ist ein vergleichsweise aufwendiges Rolliergerät erforderlich. Ein solches Rolliergerät ist jedoch insbesondere unter beengten Platzverhältnissen, wie sie im Sanitärbereich häufig vorzufinden sind, kaum einsetzbar; darüber hinaus ist das Präparieren des Rohres und das Einformen der benötigten Ringnut mit einem zusätzlichen Arbeitsaufwand verbunden.

Es besteht daher insbesondere die Aufgabe, eine kostengünstig herstellbare Rohrverbindung der eingangs erwähnten Art zu schaffen, die in einem Arbeitsgang montierbar ist und mit wenigen Umdrehungen am Schraubkörper einen dauerhaft sicheren und festen Halt bietet.

Die erfindungsgemäße Lösung dieser Aufgabe besteht bei der Klemmringverbindung der eingangs erwähnten Art darin, daß die Dicke der den Klemmring und das Dichtelement auf Abstand haltenden Ringscheibe so gewählt ist, daß der Klemmring außerhalb des Rohrleitungs-Verformungsbereiches des sich bei axialer Verspannung radial aufweitenden Dichtelementes an der Rohrleitung anliegt, daß der das Dichtelement aufnehmende Spaltraum im wesentlichen dicht umschlossen ist, und daß dazu der Spaltraum von einem gewindelosen Teilbereich des Schraubkörper-Innenmantels begrenzt und der Gewindeansatz des am Schraubanschluß vorgesehenen Außengewindes mit Abstand von dessen freier Schraubanschluß-Stirnfläche angeordnet ist.

Beim Festziehen des Schraubkörpers wird die Rohrleitung vom Klemmring, der sich aufgrund seiner runden bzw. rotationssymmetrischen Formgebung wesentlich gleichmäßiger verformen kann und somit stets über seinen gesamten Ringumfang an der Rohrleitung anliegt, nur in einer vergleichsweise schmalen Ringzone beaufschlagt, wodurch die mit diesem Klemmring erreichbare schmal umgrenzte spezifische Belastung wesentlich größer ist und wodurch beim Festziehen des Schraubkörpers eine kontrollierte Verformung der Rohrleitung im Bereich des Klemmrings und damit eine sichere formschlüssige Verbindung erreicht werden kann. Diese formschlüssige Verbindung wird auch durch eine Verformung der Rohrleitung im Bereich des Dichtelementes nicht gelockert, da der lichte Abstand zwischen dem Dichtelement und dem Klemmring so gewählt ist, daß der Klemmring außerhalb des Rohrleitungs-Verformungsbereiches des sich bei axialem Verspannen radial innen und außen aufweitenden Dichtelementes an der Rohrleitung anliegt. Durch diese kontrollierte Verformung der Rohrleitung im Klemmbereich von Klemmring und Dichtelement wird auch die Bildung tiefergehender Spalten und Zwischenräume vermieden, in welche das aus elastischem Material bestehende Dichtelement mit der Zeit nachfließen könnte. Bei der erfindungsgemäßen Rohrverbindung ist daher sowohl eine sichere Abdichtung des Verbindungsbereiches als auch eine feste Kopplung der Rohrleitung insbesondere bei hohen Leitungstemperaturen dauerhaft gewährleistet.

Die sichere Abdichtung sowie die feste Verbindung mittels der erfindungsgemäßen Klemmringverschraubung wird noch dadurch begünstigt, daß der das Dichtelement aufnehmende Spaltraum im wesentlichen dicht umschlossen ist. Dazu ist der Spaltraum von einem gewindelosen Teilbereich des Schraubkörper-Innenmantels begrenzt und der Gewindeansatz des am Schraubanschluß vorgesehenen Außengewindes mit Abstand von dessen freier Schraubanschluß-Stirnfläche angeordnet. Ist nämlich der das Dichtelement aufnehmende Spaltraum dicht umschlossen, wird ein Nachfließen und somit ein unerwünschtes Entspannen des Dichtelementes wirksam verhindert.

Vorteilhaft kann es sein, wenn die Ringscheibe eine Dicke von 1,5 bis 4 mm hat.

Der geringe Herstellungsaufwand wird noch begünstigt, wenn der Klemmring aus einem Drahtmaterial hergestellt ist.

Die erfindungsgemäße Klemmringverbindung läßt sich bei Bedarf leicht lösen und anschließend auch ebenso gut wieder neu festziehen, wenn der Klemmring aus einem federelastischen Material, insbesondere aus Federstahl oder Federmessing, hergestellt ist.

Die erfindungsgemäße Klemmringverbindung läßt sich bereits mit wenigen Umdrehungen festziehen, wenn die Konus-Innenfläche einen Winkel kleiner 40° gegenüber der Längsachse aufweist. Dabei kann es vorteilhaft sein, wenn die Konus-Innenfläche einen Winkel kleiner oder gleich 25° gegenüber der Längsachse hat.

Eine vorteilhafte Ausführungsform gemäß der Erfindung sieht vor, daß die Rohrleitung aus Kunststoff hergestellt ist und wenigstens im Bereich des Klemmringes und/oder des Dichtelementes mittels einer Stützhülse verstärkt ist. Diese Ausführungsform erlaubt es, den KlemmringauchbeivergleichsweiseweichenKunststoffrohrendauerhaft in das Rohrmaterial einzuformen und eine formschlüssige Verbindung zwischen Schraubanschluß, Schraubkörper und Klemmring herzustellen. Dabei kann die Stützhülse im Rohrleitungs-Inneren form- und/oder reibschlüssig gehalten sein.

Um die Stützhülse ohne größeren Montageaufwand im Rohrleitungs-Inneren richtig positionieren zu können, ist es zweckmäßig, wenn die Stützhülse bis zu einem Anschlag in den freien Rohrleitungs-Endbereich einführbar ist. Dabei kann der Anschlag als Stützhülsen-Ringflansch ausgebildet sein.

Ein Verkanten der Ringscheibe in der Konus-Innenfläche wird mit Sicherheit vermieden, wenn die Ringscheibe bis zu einem Anschlag in das Schraubkörper-Innere einführbar ist. Dieser Anschlag, der als Ringflansch ausgestaltet sein kann, legt zugleich die Endposition des Klemmrings in Haltestellung fest, die auch bei festem Zuziehen der Klemmringverbindung nicht überschritten wird.

Einem unbeabsichtigten Lösen der Rohrleitung aus der erfindungsgemäßen Klemmringverbindung wird noch zusätzlich entgegengewirkt, wenn am freien Endbereich der Rohrleitung ein über den Rohrleitungs-Außenumfang vorstehender und mit dem Klemmring zusammenwirkender Sicherungsanschlag vorgesehen ist.

Die erfindungsgemäße Klemmringverbindung ist vielseitig einsetzbar. So kann diese Klemmringverbindung beispielsweise für eine wandmontierbare Rohrverbindung, beispielsweise für ein Eckventil vorgesehen sein. Eine bevorzugte Ausführung gemäß der Erfindung sieht vor, daß die Klemmringverbindung als Rohrkupplung zum Verbinden zweier endseitig ineinandergreifender Rohrleitungen oder Rohrleitungsabschnitte ausgebildet ist.

Weitere Merkmale der Erfindung ergeben sich aus der folgenden Beschreibung erfindungsgemäßer Ausführungsbeispiele in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig. 1: eine in einem Teil-Längsschnitt dargestellte Klemmringverbindung, die einen im Querschnitt runden Klemmring hat, wobei der Klemmring von einem gummielastischen Dichtelement durch eine dicke und als Druckring dienende Ringscheibe getrennt ist,
- Fig. 2: die Klemmringverbindung aus Fig. 1 in ihrer festgezogenen Halteposition,
- Fig. 3: eine Klemmringverbindung, ähnlich der aus Fig. 1 und 2, wobei die Klemmringverbindung gemäß Fig. 3 an einem Kunststoffrohr befestigt ist, das durch eine innere Stützhülse verstärkt wird,
- Fig. 4: eine Klemmringverbindung, ähnlich denen aus Fig. 1 bis 3, wobei die Klemmringverbindung an einem Messingrohr angreift, das an seinem freien Rohrende einen, mit dem Klemmring zusammenwirkenden Sicherungsanschlag hat, und
- Fig. 5: eine als separater Klemmringverbinder ausgestaltete Klemmringverschraubung zum Verbinden benachbarter glattwandiger Rohrenden, wobei die - ähnlich wie in Fig. 1 und 2 ausgebildeten - Anschlußseiten dieses Klemmringverbinders im wesentlichen spiegelsymmetrisch ausgestaltet sind.

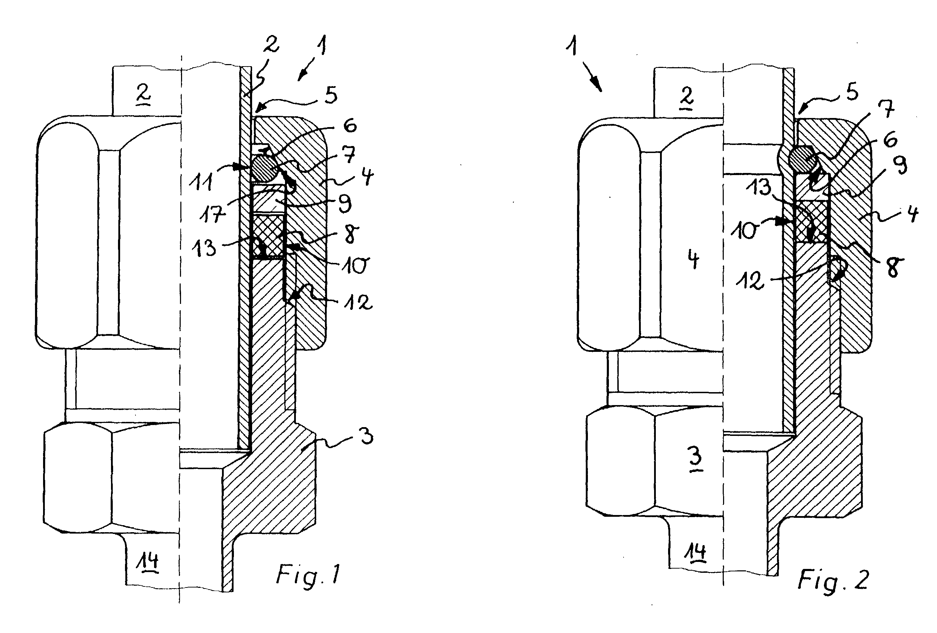

In den Fig. 1 und 2 ist eine Klemmringverbindung 1 dargestellt, die zur Verbindung einer Rohrleitung 2 insbesondere im Sanitärbereich vorgesehen ist. Die Klemmringverbindung 1 hat einen hülsenförmigen Schraubanschluß 3, der ein Außengewinde trägt. Auf das Außengewinde des Schraubanschlusses 3 ist ein Schraubkörper 4 mit seinem Innengewinde aufgeschraubt. Dieser Schraubkörper 4 ist als Überwurfmutter ausgebildet.

Der Schraubkörper 4 weist im Bereich einer stirnseitigen Durchstecköffnung 5 eine kegelstumpfförmige Konus-Innenfläche 6 auf. Diese Konus-Innenfläche 6 beaufschlagt einen geschlitzten und daher nicht vollständig geschlossenen Klemmring 7, der durch Aufschrauben des Schraubkörpers 4 auf den Schraubanschluß 3 radial nach innen gegen die Rohrleitung 2 verspannbar ist. Diese zumindest an ihrem freien Endbereich glattwandige Rohrleitung 2 steht durch die Durchstecköffnung 5 des Schraubkörpers 4 in das Hülseninnere des Schraubanschlusses 3 vor.

Die Klemmringverbindung 1 weist auch ein ring- oder rollenförmiges Dichtelement 8 auf, das aus einem gummielastischen Material besteht. Das Dichtelement 8 ist vom Klemmring 7 durch eine Ringscheibe 9 getrennt, die als Druckring dient. Das Dichtelement 8 ist in den von der Rohrleitung 2 und dem Schraubkörper 4 beziehungsweise von der Ringscheibe 9 und der benachbarten Stirnfläche 13 des Schraubanschlusses 3 umgrenzten Spaltraum 10 angeordnet.

Beim Festschrauben des Schraubkörpers 4 auf den Schraubanschluß 3 wird der Klemmring 7 mittels der Konus-Innenfläche 6 zunehmend verformt und derart eingeschnürt, daß er sich in das vergleichsweise weiche Rohrmaterial der beispielsweise aus Kupfer bestehenden Rohrleitung 2 einformen kann. Dabei wird zunehmend auch das im Spaltraum 10 befindliche Dichtelement 8 verspannt, das sich nun in radialer Richtung aufweitet und einschnürt sowie derart an der Rohrleitung 2 verspannt, daß diese sicher abgedichtet und festgehalten ist.

Wie aus den Fig. 1 und 2 deutlich wird, weist der Klemmring 7 einen runden, rotationssymmetrischen Querschnitt auf. Aufgrund seines runden, rotationssymmetrischen Querschnitts kann sich der Klemmring 7 gleichmäßig verformen und liegt somit stets über seinen gesamten Ringumfang an der Rohrleitung 2 an. Da der runde Klemmring 7 die Rohrleitung 2 nur in einer vergleichsweise schmalen Ringzone 11 (vgl. Fig. 1) beaufschlagt, wird die über den Klemmring 7 aufgebrachte Spann- und Klemmkraft auf einen kleinen Bereich der Rohrleitung 2 konzentriert. Wie aus Fig. 2 deutlich wird, ist dadurch eine kontrollierte Verformung der Rohrleitung 2 möglich, so daß die Rohrleitung 2 nicht nur kraftschlüssig, sondern vorzugsweise auch formschlüssig in der Klemmringverbindung 1 gehalten ist.

Auch das sich unter axialer Verspannung radial nach innen und außen aufweitende Dichtelement 8 kann die Rohrleitung 2 verformen. Dabei ist der lichte Abstand zwischen dem Klemmring 7 und dem Dichtelement 8 jedoch so gewählt, daß der Klemmring 7 außerhalb des Rohrleitungs-Verformungsbereiches des Dichtelementes 8 an der Rohrleitung 2 anliegt. Damit kann die durch das Dichtelement 8 aufgebrachte Verformung nicht die kraft- oder gegebenenfalls auch formschlüssige Verbindung des Klemmrings 7 an der Rohrleitung 2 lockern.

Der zwischen dem Klemmring 7 und dem Dichtelement 8 gewählte lichte Abstand wird durch die vergleichsweise dicke Ringscheibe 9 definiert, die hier eine Dicke von 1,5 bis 4 mm hat.

Der Klemmring 7 kann kostengünstig durch Ablängen eines Draht- oder Strangmaterials hergestellt werden. Da der Klemmring aus einem Drahtoder Strangmaterial hergestellt ist, werden die ansonsten bei Drehteilen üblichen Riefen vermieden, die zu einer in ihren Reibungsverhältnissen undefinierten und nur schwer kontrollierbaren Mikroverzahnung zwischen dem Klemmring 7 sowie dem gegenüberliegenden Schraubkörper 4 und damit zu einer ungleichmäßigen Verformung durch unkontrollierte Reibung des Klemmrings 7 führen könnten.

Da der Klemmring 7 vorzugsweise aus Federmessing oder einem anderen federelastischen Material besteht, kann sich dieser beim Abschrauben des Schraubkörpers 4 wieder soweit aufweiten, daß die Rohrleitung 2 aus der Klemmringverbindung 1 lösbar und entnehmbar ist.

In den Fig. 1 und 2 ist dargestellt, daß der Spaltraum 10 von einem gewindelosen Teilbereich des Schraubkörper-Innenmantels begrenzt ist. Während das Innengewinde dazu im wesentlichen auf den freien Endbereich des Schraubkörpers 4 begrenzt ist, ist der Gewindeansatz 12 des am Schraubanschluß 3 vorgesehenen Außengewindes mit Abstand von dessen freier Schraubanschluß-Stirnfläche 13 angeordnet. Da gleichzeitig die Ringscheibe 9 im wesentlichen über den zwischen Schraubkörper-Innenwand und Rohrleitungsumfang vorgesehenen Spalt reicht, ist der das Dichtelement 8 aufnehmende Spaltraum 10 im wesentlichen dicht umschlossen. Damit wird einem Nachfließen des Dichtelementes 8 in Spalten oder offene Gewindegänge und damit einem Entspannen und Lockern des Dichtelementes 9 dauerhaft entgegengewirkt.

Da die Konus-Innenfläche 6 des Schraubkörpers 4 einen Winkel kleiner 40°, vorzugsweise kleiner oder gleich 25° gegenüber der Längsachse aufweist, und da die Rohrleitung 2 nicht allein über den Klemmring 7, sondern zusätzlich auch über das einschnürende, hier in eingeschnürtem Zustand allerdings nicht dargestellte Dichtelement 8 gehalten wird, sind nur wenige Umdrehungen notwendig, um auch unter beengten Platzverhältnissen eine dauerhaft sichere und feste Verbindung des Rohres 2 zu erreichen.

In den Fig. 1 und 2 ist angedeutet, daß der Schraubanschluß 3 an dem stirnseitigen Ende einer zweiten Rohrleitung 14 vorgesehen ist. Die Rohrleitungen 2, 14 werden somit über die Klemmringverbindung 1 miteinander verbunden.

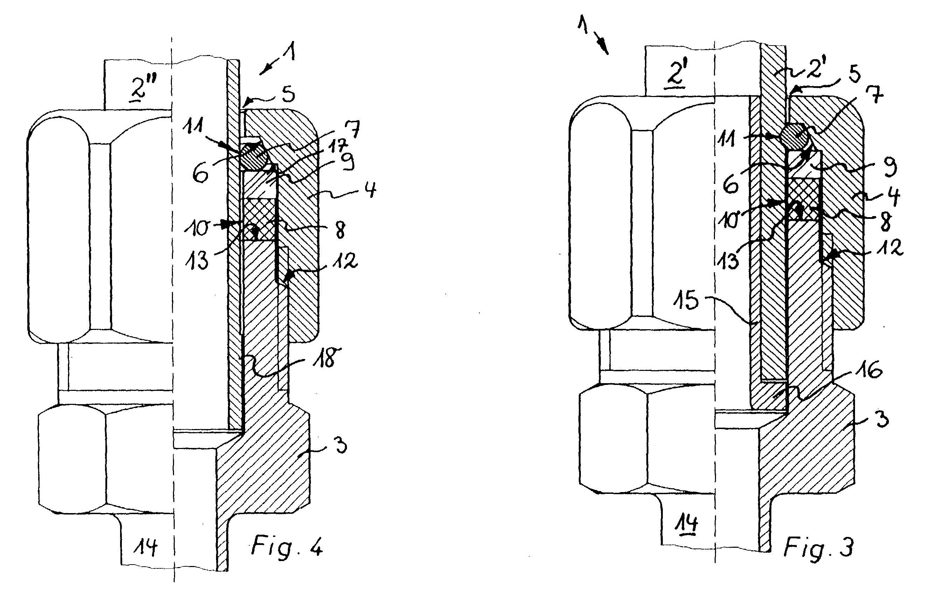

Wie insbesondere in den Fig. 1 und 4 erkennbar ist, ist die Ringscheibe 9 bis zu einem als Ringflansch ausgebildeten Anschlag 17 in den Schraubkörper 4 einführbar. Durch den Anschlag 17 wird ein Verkanten der Ringscheibe 9 in der benachbarten Konus-Innenfläche 6 mit Sicherheit vermieden. Dieser Anschlag 17 legt zugleich die Endposition des Klemmrings 7 in der in Fig. 2 dargestellten Haltestellung fest, die auch bei festem Zuziehen der Schraubverbindung nicht überschritten wird.

In Fig. 3 ist angedeutet, daß die Klemmringverbindung 1 auch zum Anschluß einer Kunststoff-Rohrleitung 2' eingesetzt werden kann. Die besonders weiche und flexible Kunststoff-Rohrleitung 2' ist dazu im Bereich des Klemmringes 7 sowie des Dichtelementes 8 mit einer Stützhülse 15 verstärkt, welche die Spann- und Klemmkraft der Klemmringverbindung 1 aufnimmt und auf das Kunststoffrohr 2' überträgt.

Die Stützhülse 15 ist bis zu einem stirnseitigen Ringflansch 16 in den freien Rohrleitüngs-Endbereich einführbar und im Rohrleitungs-Inneren reibschlüssig gehalten.

Es versteht sich, daß die hier dargestellte Klemmringverbindung auch zum Verbinden solcher Rohrleitungen eingesetzt werden kann, die an ihrem Rohrleitungsumfang nicht ohne weiteres zu verformen sind. So ist in Fig. 4 eine Klemmringverbindung 1 dargestellt, die an einem Rohrstutzen 2'' aus Messing oder einem anderen vergleichsweise schwer verformbaren Material besteht. Da der Klemmring 7 in der Klemmringverbindung 1 beim Festschrauben des Schraubkörpers 4 auf den Schraubanschluß 3 gleichmäßig verformt wird, liegt dieser Klemmring 7 nicht nur punktuell, sondern über seinen gesamten Ringumfang an der Rohrleitung 2'' an. Darüber hinaus kann durch Festschrauben des Schraubkörpers 4 auch das Dichtelement 8 derart verspannt werden, daß dieses sich in radialer Richtung aufweitet und einschnürt und dadurch an der Rohrleitung 2'' verspannt. Die Rohrleitung 2'' ist damit auch bei höheren Leitungstemperaturen dauerhaft sicher und fest in der Klemmringverbindung 1 kraftschlüssig gehalten.

Dabei kann die in Fig. 4 dargestellte Klemmringverbindung 1 beispielsweise zur Verbindung benachbarter flexibler Schlauchleitungen eingesetzt werden, wobei eine erste flexible Schlauchleitung den Rohrstutzen 2'' trägt, während eine zweite Schlauchleitung an ihrem benachbarten Stirnende den Schraubanschluß 3 aufweist.

Wie in Fig. 4 angedeutet ist, ist am freien Endbereich der Rohrleitung 2'' ein über den Rohrleitungs-Außenumfang vorstehender und mit dem Klemmring 7 zusammenwirkender Sicherungsanschlag 18 vorgesehen. Dieser Sicherungsanschlag 18 ist hier als außenseitige Querschnittserweiterung der stutzenförmigen Rohrleitung 2'' ausgebildet. Dabei wirkt der Sicherungsanschlag 18 einem unkontrollierten und unbeabsichtigten Abziehen der in der Klemmringverbindung 1 gemäß Fig. 4 nur kraftschlüssig gehaltenen Rohrleitung 2'' entgegen.

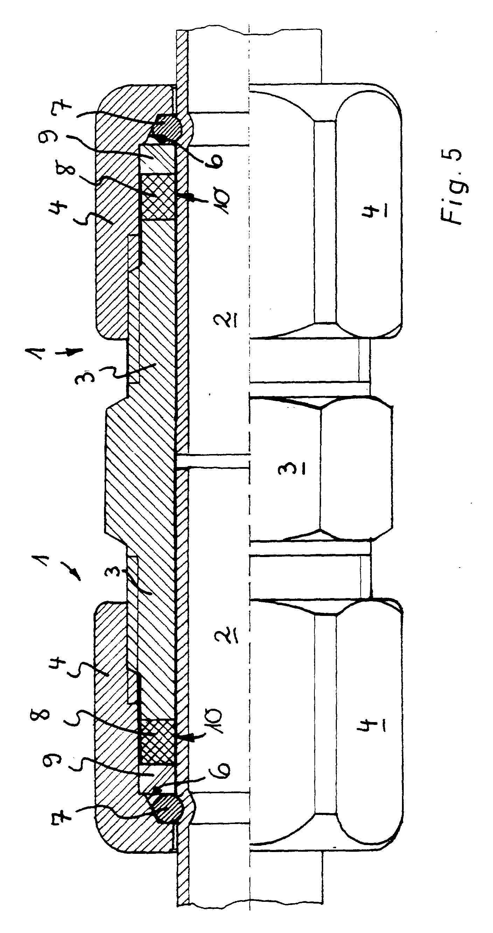

Wie der in Fig. 5 dargestellte Klemmringverbinder zeigt, kann die Klemmringverbindung 1 nicht nur zur Verbindung solcher Rohrleitungen verwendet werden, die an ihrem einen Rohrende glattwandig ausgebildet sind und an dem anderen Rohrende einen Schraubanschluß mit Außengewinde tragen. Vielmehr ist die Klemmringverbindung 1, insbesondere bei im wesentlichen spiegelbildlicher Ausgestaltung der Anschlußseiten des Klemmringverbinders, auch zur Verbindung von beiderseits glatten Rohrenden einsetzbar.

Darüber hinaus sieht eine hier nicht dargestellte Ausführungsform gemäß der Erfindung vor, daß die Klemmringverbindung an einem Eckventil vorgesehen ist. Ein solches Eckventil kann mittels der Klemmringverbindung 1 auch unter beengten Platzverhältnissen, wie sie beispielsweise unter Spülbecken oder hinter Einbauschränken vorherrschen, mit wenigen Umdrehungen am Schraubkörper mit der benachbarten Rohrleitung verbunden werden.

Die Rohrverbindung 1 ist mit geringem Aufwand kostengünstig herstellbar und bietet, auch bei hohen Leitungstemperaturen, bereits nach wenigen Umdrehungen am Schraubkörper 4 einen dauerhaft sicheren und festen Halt.

## Patentansprüche

1. Klemmringverbindung (1) für eine Rohrleitung (2, 2', 2''), insbesondere im Sanitärbereich, mit einem hülsenförmigen Schraubanschluß (3), der ein Außengewinde trägt, mit einem Schraubkörper (4), der mit einem Innengewinde auf das Außengewinde des Schraubanschlusses (3) aufschraubbar ist und eine kegelstumpfförmige Konus-Innenfläche (6) aufweist, mit einem geschlitzten und von der Konus-Innenfläche (6) des Schraubkörpers (4) beaufschlagten Klemmring (7), der durch Aufschrauben des Schraubkörpers (4) auf den Schraubanschluß (3) radial nach innen gegen die Rohrleitung (2, 2', 2'') verspannbar ist und einen runden beziehungsweise rotationssymmetrischen Querschnitt aufweist, sowie mit einem Dichtelement (8) aus elastischem Material, das vom Klemmring (7) durch eine Ringscheibe (9) auf Abstand gehalten und in dem vom Rohrleitungs-Außenumfang und Schraubkörper-Innenmantel beziehungsweise von der Ringscheibe (9) und der benachbarten Stirnfläche (13) des Schraubanschlusses (3) umschlossenen Spaltraum (10) angeordnet ist, **dadurch gekennzeichnet, daß** die Dicke der den Klemmring (7) und das Dichtelement (8) auf Abstand haltenden Ringscheibe (9) so gewählt ist, daß der Klemmring außerhalb des Rohrleitungs-Verformungsbereiches des sich bei axialer Verspannung radial aufweitenden Dichtelementes (8) an der Rohrleitung (2, 2' 2'') anliegt, daß der das Dichtelement (8) aufnehmende Spaltraum (10) im wesentlichen dicht umschlossen ist, und daß dazu der Spaltraum (10) von einem gewindelosen Teilbereich des Schraubkörper-Innenmantels begrenzt und der Gewindeansatz (12) des am Schraubanschluß (3) vorgesehenen Außengewindes mit Abstand von dessen freier Schraubanschluß-Stirnfläche (13) angeordnet ist.

2. Klemmringverbindung nach Anspruch 1, **dadurch gekennzeichnet, daß** die Ringscheibe (9) eine Dicke von 1,5 bis 4 mm hat.

3. Klemmringverbindung nach Anspruch 1 oder 2, **dadurch gekennzeichnet, daß** der Klemmring (7) aus einem Drahtmaterial hergestellt ist.

4. Klemmringverbindung nach einem der Ansprüche 1 bis 3, **dadurch gekennzeichnet, daß** der Klemmring (7) aus einem federelastischen Material hergestellt ist.

5. Klemmringverbindung nach einem der Ansprüche 1 bis 4, **dadurch gekennzeichnet, daß** der Klemmring aus Federmessing oder Federstahl besteht.

6. Klemmringverbindung nach einem der Ansprüche 1 bis 5, **dadurch gekennzeichnet, daß** die Konus-Innenfläche (6) einen Winkel kleiner 40° gegenüber der Längsachse aufweist.

7. Klemmringverbindung nach Anspruch 6, **dadurch gekennzeichnet, daß** die Konus-Innenfläche (6) einen Winkel kleiner oder gleich 40° gegenüber der Längsachse hat.

8. Klemmringverbindung nach einem der Ansprüche 1 bis 7, **dadurch gekennzeichnet, daß** die Rohrleitung (2') aus Kunststoff hergestellt ist und wenigstens im Bereich des Klemmringes (7) und/oder des Dichtelementes (8) mittels einer Stützhülse (15) verstärkt ist.

9. Klemmringverbindung nach einem der Ansprüche 1 bis 8, **dadurch gekennzeichnet, daß** die Stützhülse (15) im Rohrleitungs-Inneren form- und/oder reibschlüssig gehalten ist.

10. Klemmringverbindung nach einem der Ansprüche 1 bis 9, **dadurch gekennzeichnet, daß** die Stützhülse (15) bis zu einem Anschlag in den freien Rohrleitungs-Endbereich einführbar ist.

11. Klemmringverbindung nach Anspruch 10, **dadurch gekennzeichnet, daß** der Anschlag als Stützhülsen-Ringflansch (16) ausgebildet ist.

12. Klemmringverbindung nach einem der Ansprüche 1 bis 11, **dadurch gekennzeichnet, daß** die Ringscheibe (9) bis zu einem Anschlag in das Schraubkörper-Innere einführbar ist.

13. Klemmringverbindung nach Anspruch 12, **dadurch gekennzeichnet, daß** der Anschlag als Ringflansch (17) ausgestaltet ist.

14. Klemmringverbindung nach einem der Ansprüche 1 bis 13, **dadurch gekennzeichnet, daß** am freien Endbereich der Rohrleitung (2') ein über den Rohrleitungs-Außenumfang vorstehender und mit dem Klemmring (7) zusammenwirkender Sicherungsanschlag (18) vorgesehen ist.

15. Klemmringverbindung nach einem der Ansprüche 1 bis 14, **dadurch gekennzeichnet, daß** die Klemmringverbindung für eine wandmontierbare Rohrverbindung vorgesehen ist.

16. Klemmringverbindung nach einem der Ansprüche 1 bis 15, **dadurch gekennzeichnet, daß** die Klemmringverbindung als Rohrkupplung zum Verbinden zweier endseitig ineinandergreifender Rohrleitungen (2, 2', 2''; 14) oder Rohrleitungsabschnitte ausgebildet ist.

## Claims

1. Clamping ring connection (1) for a pipeline (2, 2', 2"), more especially in the sanitary sector, said connection having a sleeve-like screw connection (3) which is provided with an external thread, a screw body (4) which can be screwed onto the external thread of the screw connection (3) by means of an internal thread and has a frustoconical inner cone face (6), a slotted clamping ring (7) which is acted-upon by the inner cone face (6) of the screw body (4), said clamping ring being clampable radially inwardly against the pipeline (2, 2', 2"), by screwing the screw body (4) onto the screw connection (3), and said clamping ring having a round or respectively rotationally-symmetrical cross-section, as well as a sealing member (8) formed from resilient material, which sealing member is kept at a spacing from the clamping ring (7) by an annular disc (9) and is disposed in the cavity (10) surrounded by the outer pipeline circumference and inner screw body surface or respectively by the annular disc (9) and the adjacent end face (13) of the screw connection (3), **characterised in that** the thickness of the annular disc (9), which keeps the clamping ring (7) and the sealing member (8) spaced apart, is selected so that the clamping ring abuts against the pipeline (2, 2', 2") externally of the pipeline deformation region of the sealing member (8), which widens radially under axial tension, **in that** the cavity (10), accommodating the sealing member (8), is surrounded in a substantially tight manner, and **in that**, for such purpose, the cavity (10) is defined by a threadless partial region of the inner screw body surface, and the threaded extension (12) of the external thread provided on the screw connection (3) is disposed at a spacing from the free end face (13) of said screw connection.

2. Clamping ring connection according to claim 1, **characterised in that** the annular disc (9) has a thickness of 1.5 to 4 mm.

3. Clamping ring connection according to claim 1 or 2, **characterised in that** the clamping ring (7) is produced from a wire material.

4. Clamping ring connection according to one of claims 1 to 3, **characterised in that** the clamping ring (7) is produced from a resilient material.

5. Clamping ring connection according to one of claims 1 to 4, **characterised in that** the clamping ring is formed from spring brass or spring steel.

6. Clamping ring connection according to one of claims 1 to 5, **characterised in that** the inner cone face (6) is at an angle of less than 40° relative to the longitudinal axis.

7. Clamping ring connection according to claim 6, **characterised in that** the inner cone face (6) has an angle smaller than or identical to 40° relative to the longitudinal axis.

8. Clamping ring connection according to one of claims 1 to 7, **characterised in that** the pipeline (2') is produced from plastics material and is reinforced by means of a supporting sleeve (15) at least in the region of the clamping ring (7) and/or of the sealing member (8).

9. Clamping ring connection according to one of claims 1 to 8, **characterised in that** the supporting sleeve (15) is retained in the pipeline interior in a form-locking and/or friction-locking manner.

10. Clamping ring connection according to one of claims 1 to 9, **characterised in that** the supporting sleeve (15) is insertable into the free pipeline end region as far as a stop member.

11. Clamping ring connection according to claim 10, **characterised in that** the stop member is in the form of a supporting sleeve annular flange (16).

12. Clamping ring connection according to one of claims 1 to 11, **characterised in that** the annular disc (9) is insertable into the screw body interior up to a stop member.

13. Clamping ring connection according to claim 12, **characterised in that** the stop member is in the form of an annular flange (17).

14. Clamping ring connection according to one of claims 1 to 13, **characterised in that** a safety stop member (18), which protrudes beyond the outer pipeline circumference and co-operates with the clamping ring (7), is provided at the free end region of the pipeline (2').

15. Clamping ring connection according to one of claims 1 to 14, **characterised in that** the clamping ring connection is provided for a wall-mountable pipe connection.

16. Clamping ring connection according to one of claims 1 to 15, **characterised in that** the clamping ring connection is in the form of a pipe coupling for connecting two pipelines (2, 2', 2"; 14) or pipeline portions, which engage in each other at their ends.

## Revendications

1. Connexion par anneau de serrage (1) pour un conduit de tuyaux (2, 2', 2") notamment dans le domaine sanitaire, comprenant un raccord fileté (3) en forme de manchon portant un filetage extérieur, un corps à vis (4) pouvant être vissé au moyen d'un filetage intérieur sur le filetage extérieur du raccord fileté (3) et qui présente une face intérieure en cône (6) tronconique, un anneau de serrage (7) fendu sur lequel la face intérieure du cône (6) du corps à vis (4) est appliquée, l'anneau de serrage (7) pouvant être serré sur le raccord fileté (3) par le vissage du corps à vis (4) de façon radiale vers l'intérieur contre le conduit de tuyaux (2, 2', 2") et qui présente une section ronde ou symétrique en rotation, ainsi qu'une garniture (8) en un matériau élastique qui est écartée de l'anneau de serrage (7) par un disque d'écartement annulaire (9) et est disposée dans le jeu (10) entouré par la périphérie extérieure du conduit de tuyaux et la surface intérieure du corps à vis et respectivement du disque d'écartement annulaire (9) et la face frontale (13) du raccord fileté (3), **caractérisé en ce que** l'épaisseur du disque d'écartement annulaire (9) tenant l'anneau de serrage (7) et la garniture (8) écartés est choisie de façon à ce que l'anneau de serrage touche le conduit de tuyaux (2, 2', 2") à l'extérieur de la zone de déformation du conduit de tuyaux de la garniture (8) s'élargissant radialement lors du serrage axial, que le jeu (10) recevant la garniture (8) est essentiellement entouré et qu'à cet effet, le jeu (10) est délimité par une portion sans filetage de la surface intérieure du corps à vis et le début du filetage (12) du filetage extérieur prévu sur le raccord fileté (3) est disposé à une distance de sa face frontale libre du raccord fileté (13).

2. Connexion par anneau de serrage selon la revendication 1, **caractérisée en ce que** le disque d'écartement annulaire (9) présente une épaisseur de 1,5 à 4 mm.

3. Connexion par anneau de serrage selon la revendication 1 ou 2, **caractérisée en ce que** l'anneau de serrage (7) est fabriqué en un matériau en fil.

4. Connexion par anneau de serrage selon l'une quelconque des revendications 1 à 3, **caractérisée en ce que** l'anneau de serrage (7) est fabriqué en un matériau à ressort élastique.

5. Connexion par anneau de serrage selon l'une quelconque des revendications 1 à 4, **caractérisée en ce que** l'anneau de serrage est fait en laiton à ressort ou en acier à ressort.

6. Connexion par anneau de serrage selon l'une quelconque des revendications 1 à 5, **caractérisée en ce que** la face intérieure en cône (6) présente un angle inférieur à 40° par rapport à l'axe longitudinal.

7. Connexion par anneau de serrage selon la revendication 6, **caractérisée en ce que** la face intérieure en cône (6) présente un angle inférieur ou égal à 40° par rapport à l'axe longitudinal.

8. Connexion par anneau de serrage selon l'une quelconque des revendications 1 à 7, **caractérisée en ce que** le conduit de tuyaux (2') est fabriqué en plastique et est renforcé au moyen d'un manchon de soutien (15) au moins dans la zone de l'anneau de serrage (7) et/ou de la garniture (8).

9. Connexion par anneau de serrage selon l'une quelconque des revendications 1 à 8, **caractérisée en ce que** le manchon de soutien (15) est maintenu par engagement de forme ou par friction à l'intérieur du conduit de tuyaux.

10. Connexion par anneau de serrage selon l'une quelconque des revendications 1 à 9, **caractérisée en ce que** le manchon de soutien (15) peut être introduit dans l'extrémité du conduit de tuyaux libre jusqu'à une butée.

11. Connexion par anneau de serrage selon la revendication 10, **caractérisée en ce que** la butée est réalisée en forme de flasque annulaire de manchon de soutien (16).

12. Connexion par anneau de serrage selon l'une quelconque des revendications 1 à 11, **caractérisée en ce que** le disque d'écartement annulaire (9) peut être introduit dans l'intérieur du corps à vis jusqu'à une butée.

13. Connexion par anneau de serrage selon la revendication 12, **caractérisée en ce que** la butée est réalisée en forme de flasque annulaire de manchon (17).

14. Connexion par anneau de serrage selon l'une quelconque des revendications 1 à 13, **caractérisée en ce qu'**une butée d'arrêt (18) est prévue à l'extrémité libre du conduit de tuyaux (2') qui est en saillie sur la périphérie extérieure du conduit de tuyaux et qu'elle coopère avec l'anneau de serrage (7).

15. Connexion par anneau de serrage selon l'une quelconque des revendications 1 à 14, **caractérisée en ce que** la connexion par anneau de serrage est prévue pour un raccordement de tuyaux pouvant être monté sur un mur.

16. Connexion par anneau de serrage selon l'une quelconque des revendications 1 à 15, **caractérisée en ce que** la connexion par anneau de serrage est réalisée en forme de raccord de tuyaux pour lier deux conduits de tuyaux (2, 2', 2" ; 14) ou sections de tuyaux s'emmanchant par leurs extrémités.
